# EUROPEAN PATENT SPECIFICATION

(11) **EP 3 073 556 B1**
(45) Date of publication and mention of the grant of the patent: **22.08.2018**
(21) Application number: 16161571.1
(22) Date of filing: 22.03.2016
(51) Int. Cl.: H01M 4/131, H01M 10/0525, H01M 4/505, H01M 4/1391, H01M 4/36, H01M 4/525, H01M 4/62, H01M 4/66, H01M 4/02

(54) **ENERGY STORAGE DEVICE**
ENERGIESPEICHERVORRICHTUNG
DISPOSITIF DE STOCKAGE D'ÉNERGIE

(30) Priority: 26.03.2015 JP 2015064186
(43) Date of publication of application: 28.09.2016
(73) Proprietor: GS Yuasa International Ltd., Kisshoin, Minami-ku, Kyoto-shi, Kyoto 601-8520 (JP)
(72) Inventor: YAMAFUKU, Taro, Kyoto-shi Kyoto 601-8520 (JP); MASUDA, Masaki, Kyoto-shi Kyoto 601-8520 (JP); KAWAGUCHI, Kazuki, Kyoto-shi Kyoto 601-8520 (JP); SASAKI, Takeshi, Kyoto-shi Kyoto 601-8520 (JP)
(74) Representative: Isarpatent

(56) References cited:
- EP-A1- 2 471 869
- EP-A1- 2 731 177
- EP-A1- 2 755 261
- US-A1- 2013 337 322

## Description

### FIELD

The present invention relates to an energy storage device such as a nonaqueous electrolyte secondary battery.

### BACKGROUND

A lithium ion secondary battery which includes a positive electrode including a positive electrode substrate and a positive active material layer deposited on the positive electrode substrate has been heretofore known as a nonaqueous electrolyte secondary battery (e.g. JP-A-2013-065468). In the battery described in JP-A-2013-065468, the positive active material layer contains a first active material and a second active material, the first active material contains secondary particles having a compressive strength of 85 MPa or more, and the second active material contains secondary particles having an average particle size smaller than that of the secondary particles of the first active material. The positive active material layer is compressed to allow the particles of the second active material, which have a small particle size, to enter between the particles of the first active material, so that the positive active material layer has a relatively large active material density of 3.65 g/cm³ or more. Therefore, the battery described in JP-A-2013-065468 has a relatively high energy density.

In the battery described in JP-A-2013-065468, however, the particles of the active material repeatedly expand and contract as a charge-discharge reaction is repeated. When the particles of the active material repeatedly expand and contract, active material particles abutted against the positive electrode substrate move away from the positive electrode substrate, so that the positive active material layer is partially separated from the positive electrode substrate. Therefore, in the battery described in JP-A-2013-065468, the internal resistance may be increased by charge-discharge cycles. EP 2 731 177 A1, US 2013/337322 A1, EP 2 755 261 A1 and EP 2 471 869 A1 disclose batteries where an intermediate layer is present between the active material layer and the electrode substrate.

### SUMMARY

An object of the present invention is to provide an energy storage device in which the internal resistance can be inhibited from being increased by charge-discharge cycles.

An energy storage device according to an aspect of the present invention is defined in the appended claims.

### BRIEF DESCRIPTION OF DRAWINGS

FIG. 1 shows an enlarged view of a part of an electrode assembly of an energy storage device according to an embodiment.
FIG. 2 shows a sectional view of a positive electrode, a negative electrode and a separator which are joined together (II-II cross-section in FIG. 1).
FIG. 3 shows a sectional view of a positive electrode in the energy storage device according to the embodiment.
FIG. 4 shows a perspective view of the energy storage device according to the embodiment.
FIG. 5 shows a front view of the energy storage device according to the embodiment.
FIG. 6 shows a sectional view of the energy storage device along a VI-VI line position in FIG. 4.
FIG. 7 shows a sectional view of the energy storage device along a VII-VII line position in FIG. 4.
FIG. 8 shows a perspective view showing a state in which the energy storage device according to the embodiment is partially assembled, where an electrolyte solution filling plug, an electrode assembly, a current collector and an external terminal are mounted on a lid plate.
FIG. 9 shows a view explaining a configuration of the electrode assembly of the energy storage device according to the embodiment.
FIG. 10 shows a perspective view of an energy storage apparatus of the energy storage device according to the embodiment.
FIG. 11 shows a flowchart showing steps in a method for producing an energy storage device.
FIG. 12 shows electron microscope photographs of a cross-section of a positive electrode in Example 1.
FIG. 13 shows electron microscope photographs of a cross-section of a positive electrode in Example 2.
FIG. 14 shows electron microscope photographs of a cross-section of a positive electrode in Example 3.
FIG. 15 shows electron microscope photographs of a cross-section of a positive electrode in Example 4.
FIG. 16 shows electron microscope photographs of a cross-section of a positive electrode in Comparative Example 2.
FIG. 17 shows a graph showing a resistivity ratio with respect to the number of cycles in each battery.

### DESCRIPTION OF EMBODIMENTS

According to an aspect of the present invention, there is provided an energy storage device including an electrode having an electrode substrate; an active material layer which is disposed to cover a surface of the electrode substrate and which contains active material particles; and an intermediate layer which is disposed between the electrode substrate and the active material layer and which contains a binder, wherein the active material particles of the active material layer enter the intermediate layer, and are in contact with the electrode substrate and the intermediate layer.

In the energy storage device having the above-mentioned configuration, the active material particles enter the intermediate layer, and are in contact with the electrode substrate and the intermediate layer. When a charge-discharge reaction is repeated in the energy storage device, the active material particles repeatedly expand and contract. However, because the active material particles enter the intermediate layer, and are in contact with the electrode substrate and the intermediate layer, they are hard to move away from the electrode substrate and the intermediate layer even when expanding and contracting. Accordingly, the active material layer is hard to be separated from the intermediate layer. The active material particles enter the intermediate layer containing a binder, and are in contact with the electrode substrate. The binder of the intermediate layer exists on the circumference of a part where the active material particles are in contact with the electrode substrate. Because the binder exists, the active material particles are hard to move away from the electrode substrate and the intermediate layer, so that the active material layer is hard to be separated from the intermediate layer. Accordingly, in the energy storage device, the internal resistance can be inhibited from being increased by charge-discharge cycles.

In the energy storage device, the thickness of the intermediate layer may be not less than 0.1 µm and not more than 2 µm. The electrode may be a positive electrode.

In the energy storage device, for example, the active material particles of the active material layer may contain a lithium metal composite oxide represented by the chemical composition of LiₓNi_{y}Mn_{z}Co_{(1-y-z)}O₂ (where 0 < x ≤ 1.3, 0 < y < 1 and 0 < z < 1). Accordingly, in the energy storage device, the active material particles can more reliably pass through the intermediate layer during production. For the same reason as described above, separability of the active material layer from the electrode substrate can be reduced.

In the energy storage device, the active material particles include secondary particles, and the secondary particles have irregularities on the surfaces thereof. The convex parts easily pass through the intermediate layer because they are projective. Therefore, secondary particles disposed with the convex parts projecting toward the electrode substrate can more reliably pass through the intermediate layer during production.

In the energy storage device, the thickness of the intermediate layer may be smaller than the average particle size D50 of the primary particles in the active material particles. With the above-mentioned configuration, the active material particles can more reliably pass through the intermediate layer during production.

In the energy storage device, the intermediate layer may contain a conductive aid. The conductive aid may be carbon black. When the conductive aid is carbon black, more uniform conductivity can be imparted to the intermediate layer.

In the energy storage device, the binder of the intermediate layer may be a compound having a chitosan molecular structure. When the binder is a compound having a chitosan molecular structure, adhesion between the intermediate layer and the electrode substrate can be more reliably retained.

According to the present invention, the internal resistance of the energy storage device can be inhibited from being increased by charge-discharge cycles.

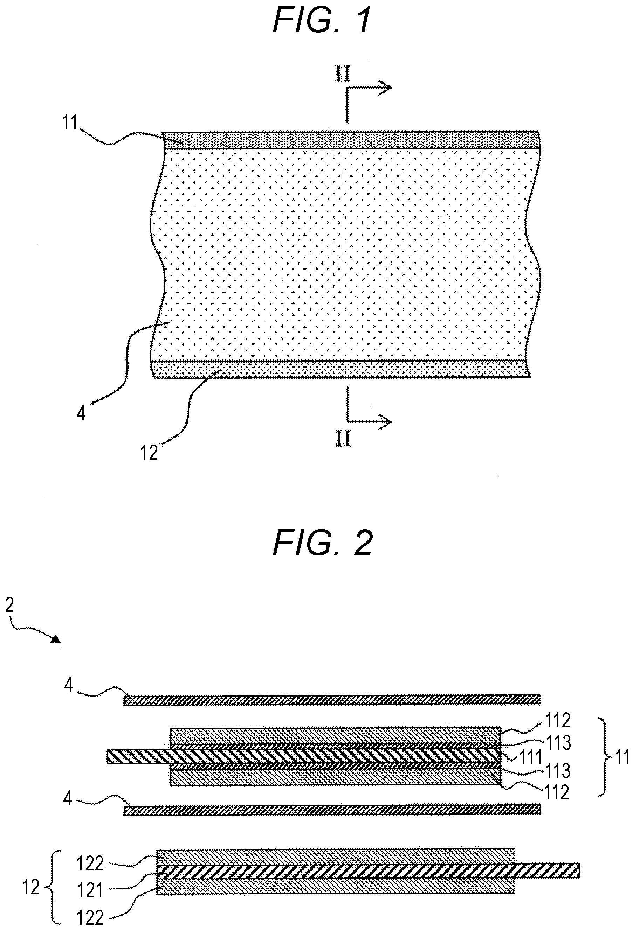

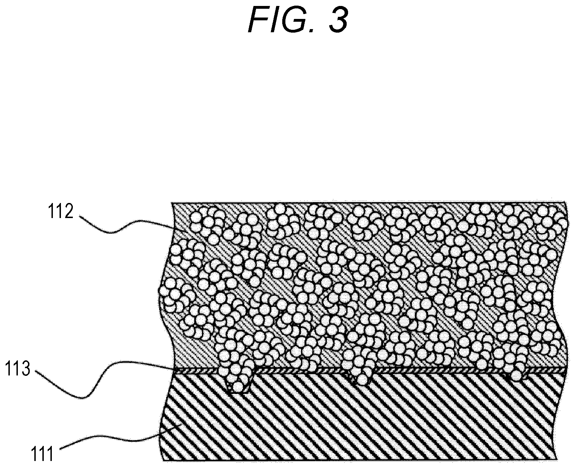

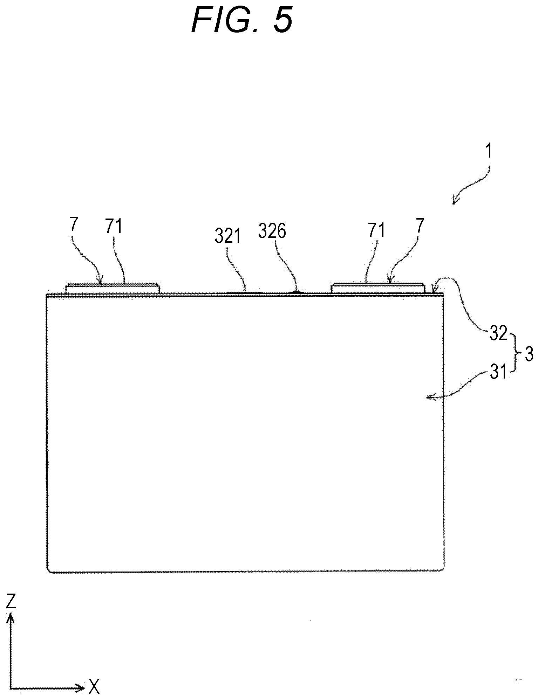

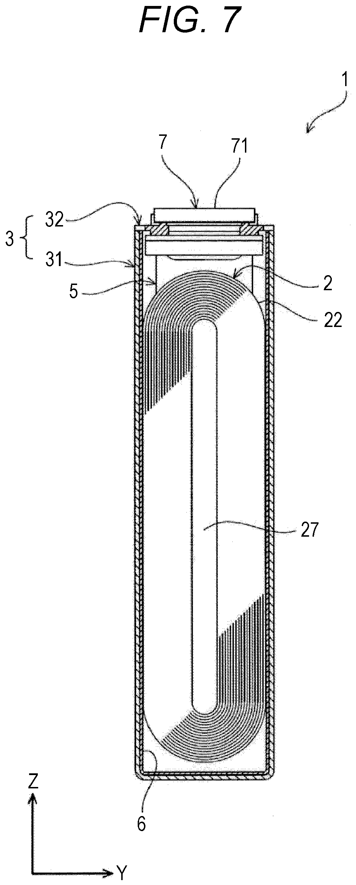

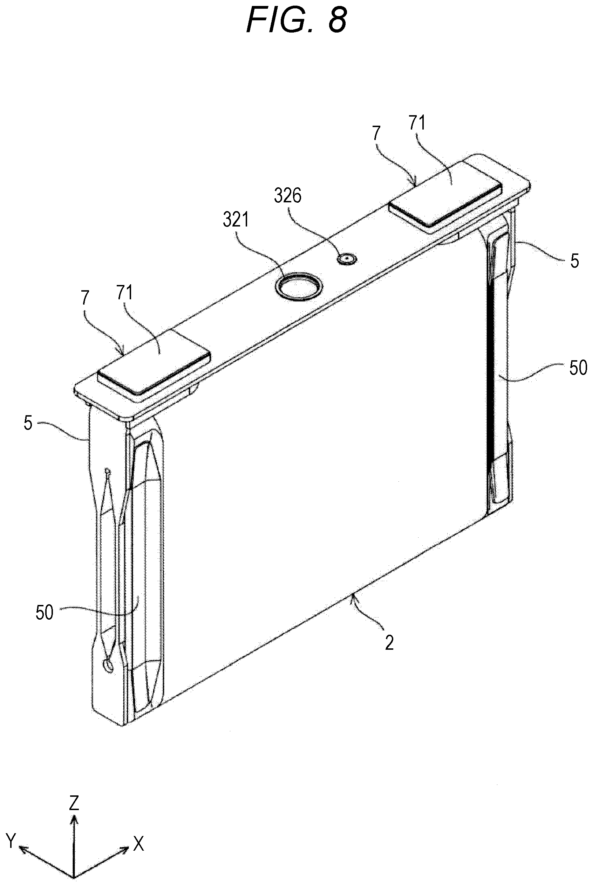

Hereinafter, one embodiment of the energy storage device according to the present invention will be described with reference to FIGS. 1 to 9. Energy storage devices include secondary batteries, capacitors and so on. In this embodiment, a secondary battery capable of being charged and discharged will be described as one example of the energy storage device. The names of constituent members (constituent elements) in this embodiment are specific to this embodiment, and may be different from the names of constituent members (constituent elements) in the background art.

An energy storage device 1 according to this embodiment is a nonaqueous electrolyte secondary battery. More specifically, the energy storage device 1 is a lithium ion secondary battery which makes use of electron transfer that occurs with migration of lithium ions. The energy storage device 1 of this type supplies electric energy. One or more energy storage devices 1 are used. Specifically, one energy storage device 1 is used when a required power and a required voltage are small. On the other hand, when at least one of a required power and a required voltage is large, the energy storage device 1 is combined with other energy storage devices 1, and used in an energy storage apparatus 100. In the energy storage apparatus 100, energy storage devices 1 used in the energy storage apparatus 100 supply electric energy.

The energy storage device 1 has a positive electrode 11 and a negative electrode 12 as electrodes. Specifically, as shown in FIGS. 1 to 9, the energy storage device 1 includes an electrode assembly 2 including the positive electrode 11, the negative electrode 12 and a separator 4; a case 3 which stores the electrode assembly 2; and an external terminal 7 disposed on the outside of the case 3, the external terminal 7 communicating with the electrode assembly 2. The energy storage device 1 includes, in addition to the electrode assembly 2, the case 3 and the external terminal 7, a current collector 5 which makes the electrode assembly 2 conductive with the external terminal 7; and the like.

The electrode assembly 2 is formed by winding a layered product 22 in which the positive electrode 11 and the negative electrode 12 are laminated while being insulated from each other by the separator 4. Accordingly, in the electrode assembly 2, the separator 4 is disposed between the positive electrode 11 and the negative electrode 12 facing the positive electrode 11.

The positive electrode 11 includes a metal foil 111 as a positive electrode substrate; an intermediate layer 113 which is formed so as to overlap the metal foil 111 and which contains a conductive aid and a binder; and a positive active material layer 112 which is formed so as to overlap the intermediate layer 113 and which contains active material particles. The intermediate layer 113 is not required to contain a conductive aid, but as one example, an intermediate layer containing a conductive aid will be described in this embodiment.

The metal foil 111 is in the form of a belt. The thickness of the metal foil 111 is normally not less than 10 µm and not more than 20 µm. The metal foil 111 of the positive electrode in this embodiment is, for example, an aluminum foil. The positive electrode 11 has an exposed part 105, which is not covered with the positive active material layer 112 (a part where the positive active material layer 112 is not formed), at one end edge of the belt shape in the width direction, i.e. the short direction.

The positive active material layer 112 is disposed so as to face the negative electrode 12. The positive active material layer 112 contains a positive active material and a binder. Specifically, the positive active material layer 112 contains active material particles of the positive electrode in an amount of not less than 80% by mass and not more than 98% by mass, a binder in an amount of not less than 1% by mass and not more than 10% by mass, and a conductive aid in an amount of not less than 1% by mass and not more than 10% by mass.

The active material particles of the positive electrode 11 are particles containing a positive active material capable of storing and releasing lithium ions. The active material particles contain 95% by mass or more of the positive active material. The positive active material is, for example, a lithium metal oxide. Specifically, the positive active material is, for example, a composite oxide represented by LiₓMeOₚ (Me represents one or more transition metals) (LiₓCoO₂, LiₓNiO₂, LiₓMnO₄, LiₓNi_{y}Mn_{z}Co_{(1-y-z)}O₂ or the like), or a polyanion compound represented by LiₐMe_{b}(XO_{c})_{d} (Me represents one or more transition metals, and X represents, for example, P, Si, B or V) (LiₐFe_{b}PO₄, LiₐMn_{b}PO₄, LiₐMn_{b}SiO₄, LiₐCo_{b}PO₄F or the like). The positive active material in this embodiment is a lithium metal composite oxide represented by the chemical composition of LiₓNi_{y}Mn_{z}Co_{(1-y}-_{z)}O₂ (where 0 < x ≤ 1.3, 0 < y < 1 and 0 < z < 1), specifically LiNi_{1/3}Co_{1/3}Mn_{1/3}O₂. The average particle size D50 of the active material particles of the positive electrode 11 is normally not less than 3 µm and not more than 20 µm.

The positive active material is harder than the metal foil 111. The active material particles of the positive electrode which contain the positive active material are harder than the metal foil 111. The hardness of each of the positive active material and the metal foil 111 is determined by measurement using, for example, a dynamic ultramicro hardness meter manufactured by Shimadzu Corporation.

In the positive active material layer 112, active material particles exist in the form of secondary particles in which primary particles containing the positive active material are aggregated, and in the form of primary particles which are not aggregated. That is, in the positive active material layer 112, both independently existing primary particles and secondary particles in which primary particles are aggregated exist. Most of the active material particles contained in the positive active material layer 112 are secondary particles in which primary particles are aggregated.

The active material particles of the positive electrode 11 enter the intermediate layer 113, and are in contact with the metal foil 111 and the intermediate layer 113. Specifically, the active material particles of the positive electrode 11 pass through the intermediate layer 113, and get stuck in the metal foil 111.

The active material particles of the positive electrode 11 include secondary particles, and the secondary particles have irregularities on the surfaces thereof. The secondary particle having irregularities on the surface thereof includes a central part with primary particles aggregated in a spherical form, and a convex part with primary particles projecting outward from the surface of the central part. The convex part passes through the intermediate layer 113, and is stuck in the metal foil 111.

Examples of the binder to be used in the positive active material layer 112 include polyvinylidene fluoride (PVdF), a copolymer of ethylene and vinyl alcohol, polymethyl methacrylate, polyethylene oxide, polypropylene oxide, polyvinyl alcohol, polyacrylic acid, polymethacrylic acid and styrene butadiene rubber (SBR). The binder in this embodiment is polyvinylidene fluoride.

The positive active material layer 112 may further contain a conductive aid such as ketjen black (registered trademark), acetylene black or graphite. The positive active material layer 112 in this embodiment contains acetylene black as a conductive aid.

The intermediate layer 113 is disposed between the metal foil 111 and the positive active material layer 112. The intermediate layer 113 does not contain active material particles. The ratio of the thickness of the intermediate layer 113 to the thickness of the metal foil 111 of the positive electrode 11 is not less than 0.005 and not more than 0.2. The thickness of the intermediate layer 113 is normally not less than 0.1 µm and not more than 2 µm. The thickness of the intermediate layer 113 is a thickness at a part where active material particles are not stuck in the intermediate layer 113. Specifically, the thickness of the intermediate layer 113 is, for example, a thickness of the intermediate layer 113 on the circumference of active material particles which pass through the intermediate layer 113, and get stuck in the metal foil 111.

The intermediate layer 113 can be partially formed between the positive electrode substrate (metal foil) 111 and the positive active material layer 112. That is, the intermediate layer 113 can partially cover a surface of the positive electrode substrate (metal foil) 111.

The thickness of the intermediate layer 113 is smaller than the average particle size D50 of primary particles in the active material particles. The average particle size D50 of the primary particles is determined from the average particle size of the primary particles in a scanning electron microscope photograph of a cross-section of the electrode (positive electrode 11) in the thickness direction. Specifically, in the photograph of the cross-section, at least 100 primary particles of active material particles disposed so as to extend along the metal foil 111 are randomly selected, the longest diameters of the primary particles are measured, and the measured values are averaged to determine the average particle size D50 of the primary particles.

The ratio of the thickness of the intermediate layer 113 to the average particle size D50 of the primary particles of the active material particles is normally not less than 0.05 and not more than 1.0.

The intermediate layer 113 can be formed by performing application in such a manner that the solid content is 2 g/m² or less, preferably not less than 0.1 g/m² and not more than 1 g/m². The solid content is the content of components excluding components that are volatilized after application during production, i.e. a basis weight.

The intermediate layer 113 contains a binder at a mass ratio of not less than 0.5 and not more than 5 relative to a conductive aid. The intermediate layer 113 contains the conductive aid in an amount of not less than 30% by mass and not more than 80% by mass. The intermediate layer 113 contains the binder in an amount of not less than 20% by mass and not more than 70% by mass.

The intermediate layer 113 is softer than the active material, and softer than the metal foil 111. The hardness of each thereof is determined by, for example, a Vickers hardness test. The hardness of the intermediate layer 113 can be adjusted by, for example, changing the amount ratio between the binder and the conductive aid.

The conductive aid is at least one selected from the group consisting of carbon black and graphite. Examples of the carbon black include ketjen black (registered trademark) and acetylene black. In this embodiment, the intermediate layer 113 contains carbon black as a conductive aid.

The binder is at least one selected from the group consisting of a compound having a chitosan molecular structure, polyvinylidene fluoride (PVdF), a copolymer of ethylene and vinyl alcohol, polymethyl methacrylate, polyethylene oxide, polypropylene oxide, polyvinyl alcohol, polyacrylic acid, polymethacrylic acid and styrene butadiene rubber (SBR). In this embodiment, the intermediate layer 113 contains at least a compound having a chitosan molecular structure as a binder.

Examples of the compound having a chitosan molecular structure include crosslinked polymers of cellulose and a chitosan pyrrolidone carboxylic acid salt, and derivatives of chitin or chitosan.

The negative electrode 12 includes a metal foil 121 as a negative electrode substrate, and a negative active material layer 122 formed on the metal foil 121. The metal foil 121 is in the form of a belt. The metal foil 121 of the negative electrode in this embodiment is, for example, a copper foil. The negative electrode 12 has an exposed part 105, which is not covered with the negative active material layer 122 (a part where the negative active material layer is not formed), at the other end edge of the belt shape in the width direction, i.e. the short direction (on a side opposite to the exposed part 105 of the positive electrode 11).

The negative active material layer 122 contains a negative active material and a binder.

The negative active material is, for example, carbon materials such as graphite, hardly graphitizable carbon and easily graphitizable carbon, or materials which undergo an alloying reaction with lithium ions, such as silicon (Si) and tin (Sn). The negative active material in this embodiment is graphite.

The binder to be used in the negative active material layer 122 is the same as the binder used in the positive active material layer 112. The binder in this embodiment is polyvinylidene fluoride.

The negative active material layer 122 may further contain a conductive aid such as ketjen black (registered trademark), acetylene black or graphite. The negative active material layer 122 in this embodiment does not contain a conductive aid.

The separator 4 is a member having insulation quality. The separator 4 is in the form of a belt. The separator 4 is disposed between the positive electrode 11 and the negative electrode 12. Accordingly, in the electrode assembly 2 (specifically layered product 22), the positive electrode 11 and the negative electrode 12 are insulated from each other. The separator 4 holds an electrolyte solution in the case 3. Accordingly, during charge-discharge of the energy storage device 1, lithium ions move between the positive electrode 11 and the negative electrode 12 which are alternately laminated with the separator 4 sandwiched therebetween.

The separator 4 is formed as a porous material using, for example, a woven fabric, a nonwoven fabric or a porous membrane. The material of the separator 4 is a polymer compound, glass, ceramic or the like. Examples of the polymer compound include polyacrylonitrile (PAN), polyamide (PA), polyesters such as polyethylene terephthalate (PET), polyolefins (PO) such as polypropylene (PP) and polyethylene (PE), and cellulose.

The width of the separator 4 (dimension of the belt shape in the short direction) is slightly larger than the width of the negative active material layer 122. The separator 4 is disposed between the positive electrode 11 and the negative electrode 12 which are joined together while being positionally shifted in the width direction so that the positive active material layer 112 and the negative active material 122 overlap each other.

In the electrode assembly 2 in this embodiment, the positive electrode 11 and the negative electrode 12 which are configured as described above are wound while being insulated from each other by the separator 4. That is, in the electrode assembly 2 in this embodiment, the layered product 22 of the positive electrode 11, the negative electrode 12 and the separator 4 is wound.

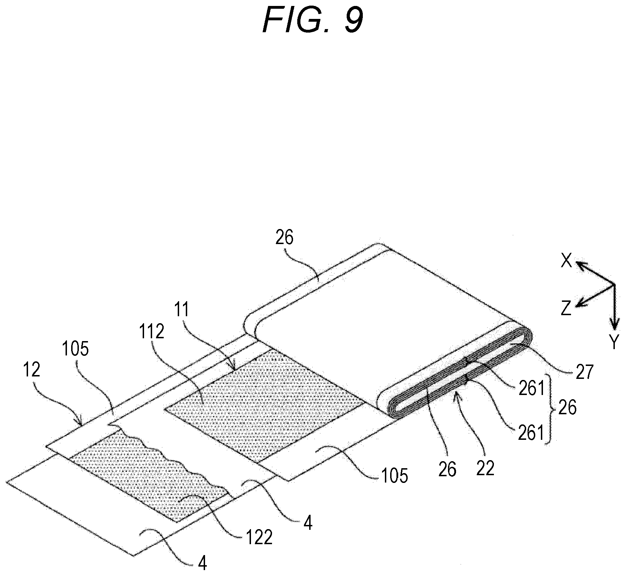

As shown in FIG. 9, the exposed part 105 of the positive electrode 11 and the exposed part 105 of the negative electrode 12 do not overlap each other with the positive electrode 11 and the negative electrode 12 laminated together. That is, the exposed part 105 of the positive electrode 11 projects in the width direction from a region where the positive electrode 11 and the negative electrode 12 overlap each other, and the exposed part 105 of the negative electrode 12 projects in the width direction (direction opposite to the direction in which the exposed part 105 of the positive electrode 11 projects) from the region where the positive electrode 11 and the negative electrode 12 overlap each other. The electrode assembly 2 is formed by winding the positive electrode 11, the negative electrode 12 and the separator 4 in a laminated state, i.e. the layered product 22. A part where only the exposed part 105 of the positive electrode 11 or the exposed part 105 of the negative electrode 12 is laminated forms an exposed layered part 26 in the electrode assembly 2.

The exposed layered part 26 is a part which is made conductive with the current collector 5 in the electrode assembly 2. The exposed layered part 26 is sectioned into two parts (bisected exposed layered parts) 261 with a hollow part 27 sandwiched therebetween when viewed in the winding center direction of the wound positive electrode 11, negative electrode 12 and separator 4.

The exposed layered part 26 configured as described above is provided in each of the electrodes of the electrode assembly 2. That is, the exposed layered part 26 where only the exposed part 105 of the positive electrode 11 is laminated forms the exposed layered part of the positive electrode 11 in the electrode assembly 2, and the exposed layered part 26 where only the exposed part 105 of the negative electrode 12 is laminated forms the exposed layered part of the negative electrode 12 in the electrode assembly 2.

The case 3 includes a case main body 31 having an opening, and a lid plate 32 which covers (closes) the opening of the case main body 31. The case 3 stores in the internal space an electrolyte solution together with the electrode assembly 2, the current collector 5 and so on. The case 3 is formed of a metal resistant to the electrolyte solution. The case 3 is formed of, for example, an aluminum-based metal material such as aluminum or an aluminum alloy. The case 3 may be formed of a metal material such as stainless steel or nickel, a composite material with a resin of nylon etc. bonded to aluminum, or the like.

The electrolyte solution is a nonaqueous solution-based electrolyte solution. The electrolyte solution is obtained by dissolving an electrolyte salt in an organic solvent. Examples of the organic solvent include cyclic carbonic acid esters such as propylene carbonate and ethylene carbonate, and chain carbonates such as dimethyl carbonate, diethyl carbonate and ethylmethyl carbonate. Examples of the electrolyte salt include LiClO₄, LiBF₄ and LiPF₆. The electrolyte solution is one obtained by dissolving 1 mol/L of LiPF₆ in a mixed solvent prepared by mixing propylene carbonate, dimethyl carbonate and ethylmethyl carbonate at a ratio of propylene carbonate : dimethyl carbonate : ethylmethyl carbonate = 3 : 2 : 5.

The case 3 is formed by bonding the circumferential edge part of the opening of the case main body 31 and the circumferential edge part of the rectangular lid plate 32 to each other with one superimposed on the other. The case 3 has an internal space defined by the case main body 31 and the lid plate 32. In this embodiment, the circumferential edge part of the opening of the case main body 31 and the circumferential edge part of the lid plate 32 are bonded to each other by welding.

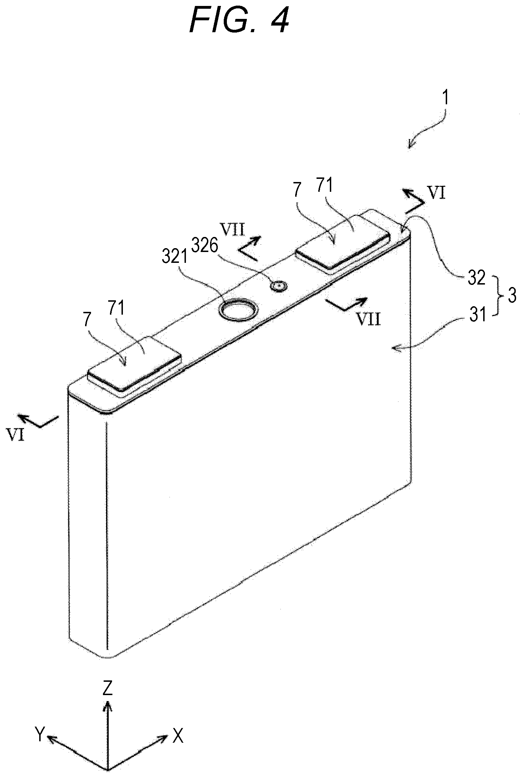

Hereinafter, the long-side direction of the lid plate 32 is an X-axis direction, the short-side direction of the lid plate 32 is a Y-axis direction, and the normal direction of the lid plate 32 is a Z-axis direction as shown in FIG. 4.

The case main body 31 has a prismatic cylindrical shape in which one end in the opening direction (Z-axis direction) is covered (i.e. bottomed prismatic shape).

The lid plate 32 is a plate-shaped member which covers the opening of the case main body 31. Specifically, the lid plate 32 is in contact with the case main body 31 so as to cover the opening of the case main body 31. More specifically, the circumferential edge part of the lid plate 32 is superimposed on the circumferential edge of the opening of the case main body 31 in such a manner that the lid plate 32 covers the opening. The boundary part between the lid plate 32 and the case main body 31 is welded with the lid plate 32 superimposed on the circumferential part of the opening. In this way, the case 3 is formed.

The lid plate 32 has a contour shape corresponding to the circumferential part of the opening of the case main body 31 when viewed in the Z-axis direction. That is, the lid plate 32 is a rectangular plate material which is long in the X-axis direction when viewed in the Z-axis direction. The four corners of the lid plate 32 are in the form of a circular arc.

The lid plate 32 includes a gas release valve 321 capable of discharging a gas in the case 3 to the outside. The gas release valve 321 discharges a gas from the inside of the case 3 to the outside when the internal pressure of the case 3 increases to a preset pressure. The gas release valve 321 is provided at the central part of the lid plate 32 in the X-axis direction.

The case 3 is provided with an electrolyte solution filling hole for injecting an electrolyte solution. The electrolyte solution filling hole establishes communication between the inside and the outside of the case 3. The electrolyte solution filling hole is provided in the lid plate 32.

The electrolyte solution filling hole is sealed (covered) with an electrolyte solution filling plug 326. The electrolyte solution filling plug 326 is fixed to the case 3 (lid plate 32 in the example in this embodiment) by welding.

The external terminal 7 is a part which is electrically connected to the external terminal 7 of another energy storage device 1, external equipment or the like. The external terminal 7 is formed of a member having conductivity. For example, the external terminal 7 is formed of a metal material having high weldability, such as an aluminum-based metal material such as aluminum or an aluminum alloy, or a copper-based metal material such as copper or a copper alloy.

The external terminal 7 has a surface 71 to which a bus bar etc. can be welded. The surface 71 is a flat surface. The external terminal 7 is in the form of a plate extending along the lid plate 32. Specifically, the external terminal 7 is in the form of a rectangular plate when viewed in the Z-axis direction.

The current collector 5 is disposed in the case 3, and directly or indirectly connected to the electrode assembly 2 in such a manner that a current can be passed between the current collector 5 and the electrode assembly 2. The current collector 5 in this embodiment is connected to the electrode assembly 2 via a clip member 50 in such a manner that a current can be passed between the current collector 5 and the electrode assembly 2. That is, the energy storage device 1 includes the clip member 50 that connects the electrode assembly 2 and the current collector 5 to each other in such a manner that a current can be passed therebetween.

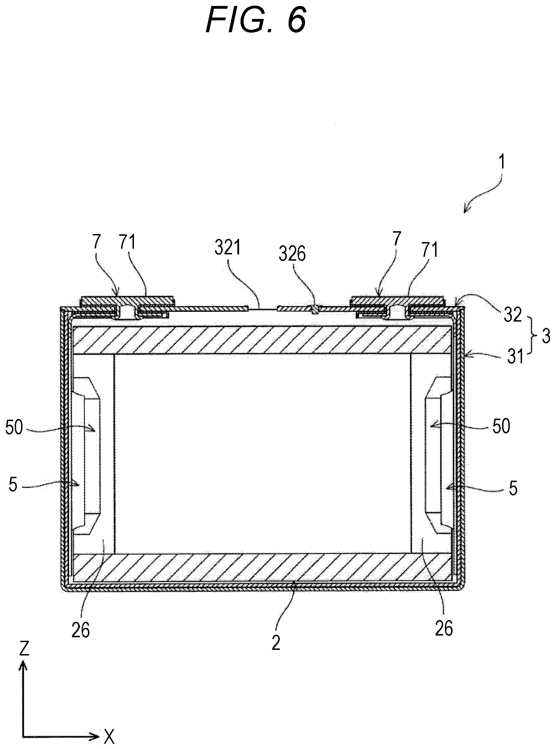

The current collector 5 is formed of a member having conductivity. As shown in FIG. 6, the current collector 5 is disposed along the inner surface of the case 3.

The current collector 5 is disposed on each of the positive electrode 11 and the negative electrode 12 in the energy storage device 1. In the energy storage device 1 according to this embodiment, the current collector 5 is disposed on each of the exposed layered part 26 of the positive electrode 11 and the exposed layered part 26 of the negative electrode 12 of the electrode assembly 2 in the case 3.

The current collector 5 of the positive electrode 11 and the current collector 5 of the negative electrode 12 are formed of different materials. Specifically, the current collector 5 of the positive electrode 11 is formed of, for example, aluminum or an aluminum alloy, and the current collector 5 of the negative electrode 12 is formed of, for example, copper or a copper alloy.

In the energy storage device 1 according to this embodiment, the electrode assembly 2 (specifically, electrode assembly 2 and current collector 5) stored in a bag-shaped insulating cover 6 is stored in the case 3.

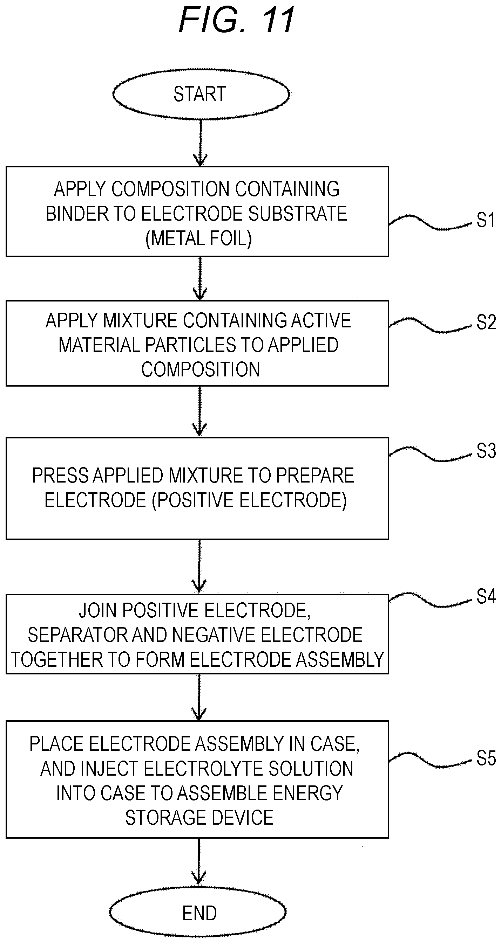

A method for producing the energy storage device according to this embodiment will now be described with reference to FIG. 11.

A composition containing a conductive aid and a binder is applied to an electrode substrate (step S1). A mixture containing active material particles is applied to the applied composition (step S2). The applied mixture is pressed to prepare an electrode (positive electrode) (step S3). An electrode assembly is formed by joining a positive electrode, a separator and a negative electrode together (step S4). The electrode assembly is placed in the case, and an electrolyte solution is injected into the case to assemble the energy storage device (step S5).

In step S1, a composition for an intermediate layer, which contains a conductive aid, a binder and a solvent is applied to each of both surfaces of the metal foil 111 for a positive electrode to form the intermediate layer 113. As an application method for forming the intermediate layer 113, a common method is employed.

In step S2, a mixture containing a positive active material, a binder and a solvent is applied to the outside surface of each formed intermediate layer 113 to form the positive active material layer 112. As an application method for forming the positive active material layer 112, a common method is employed.

In step S3 a roll pressing method is employed. Specifically, the metal foil 111, the intermediate layer 113 and the positive active material layer 112, which are stacked one on another, are pressed while being sandwiched between a pair of rolls. Accordingly, the active material particles of the positive electrode 11 are made to enter the intermediate layer 113, pass through the intermediate layer 113 and get stuck in the metal foil 111. The active material particles are then brought into contact with the metal foil 111. The negative electrode 12 can be similarly prepared by forming the negative active material layer 122 on the metal foil 121 for a negative electrode.

In step S3, the pressing pressure is preferably not less than 10 kgf/mm and not more than 100 kgf/mm. In pressing, it is preferable that the roll has a diameter of Φ360 mm and a temperature of 150°C.

In step S4, the layered product 22 with the separator 4 sandwiched between the positive electrode 11 and the negative electrode 12 is wound to form the electrode assembly 2. In formation of the electrode assembly 2, the layered product 22 is prepared by joining the positive electrode 11, the separator 4 and the negative electrode 12 in such a manner that the positive active material layer 112 and the negative active material layer 122 face each other with the separator 4 interposed therebetween. Next, the layered product 22 is wound to form the electrode assembly 2.

In step S5, the electrode assembly 2 is placed in the case main body 31 of the case 3, the opening of the case main body 31 is covered with the lid plate 32, and the electrolyte solution is injected into the case 3. At the time of covering the opening of the case main body 31 with the lid plate 32, the electrode assembly 2 is placed in the case main body 31, and the opening of the case main body 31 is covered with the lid plate 32 with the positive electrode 11 made conductive with one external terminal 7 and the negative electrode 12 made conductive with the other external terminal 7. At the time of injecting the electrolyte solution into the case 3, the electrolyte solution is injected into the case 3 through an injection hole of the lid plate 32 of the case 3.

In the energy storage device 1 of this embodiment which is configured as described above, the active material particles enter the intermediate layer 113, and are in contact with the electrode substrate (metal foil) 111 and the intermediate layer 113 of the positive electrode 11. When a charge-discharge reaction is repeated in the energy storage device 1, the active material particles repeatedly expand and contract. However, because the active material particles enter the intermediate layer 113, and are in contact with the electrode substrate (metal foil) 111 and the intermediate layer 113 of the positive electrode 11, they are hard to move away from the electrode substrate (metal foil) 111 and the intermediate layer 113 even when expanding and contracting. Accordingly, the positive active material layer 112 is hard to be separated from the intermediate layer 113. The active material particles enter the intermediate layer 113 containing a binder, and are in contact with the electrode substrate (metal foil) 111 and the intermediate layer 113. The binder of the intermediate layer 113 exists on the circumference of a part where the active material particles are in contact with the electrode substrate (metal foil) 111. Because the binder exists, the active material particles are hard to move away from the electrode substrate (metal foil) 111 and the intermediate layer 113, so that the positive active material layer 112 is hard to be separated from the intermediate layer 113. Accordingly, in the energy storage device 1, the internal resistance can be inhibited from being increased by charge-discharge cycles.

In the energy storage device 1, the active material particles of the positive electrode 11 pass through the intermediate layer 113, and get stuck in the electrode substrate (metal foil) 111 of the positive electrode 11. Because the active material particles are stuck in the electrode substrate (metal foil) 111, they are hard to move away from the electrode substrate (metal foil) 111 and the intermediate layer 113 even when expanding and contracting as described above. Accordingly, the positive active material layer 112 is hard to be separated from the intermediate layer 113. The active material particles pass through the intermediate layer 113 containing a binder, and get stuck in the electrode substrate (metal foil) 111. The binder of the intermediate layer 113 exists on the circumference of a part where the active material particles are stuck in the electrode substrate. Because the binder exists, the active material particles are hard to move away from the electrode substrate (metal foil) 111 and the intermediate layer 113, so that the positive active material layer 112 is hard to be separated from the intermediate layer 113. Accordingly, in the energy storage device 1, the internal resistance can be inhibited from being increased by charge-discharge cycles. The active material particles break through an oxidized surface film existing on a surface of the electrode substrate (metal foil) 111, and get stuck in and are in contact with the electrode substrate (metal foil) 111. Accordingly, the internal resistance can be inhibited from being increased, and further, performance, such as power, of the energy storage device 1 can be improved.

In the energy storage device 1, a conductive aid may exist on the circumference of the part where the active material particles are stuck in the electrode substrate because the intermediate layer 113 contains the conductive aid. Because the conductive aid exists, conductivity between the stuck active material particles and the electrode substrate (metal foil) 111 is reliably secured.

In the energy storage device 1, the active material particles of the positive active material layer 112 contain a lithium metal composite oxide represented by the chemical composition of LiₓNi_{y}Mn_{z}Co_{(1-y-z)}O₂ (where 0 < x ≤ 1.3, 0 < y < 1 and 0 < z < 1). Accordingly, the active material particles can be more reliably stuck in the metal foil 111 during production.

In the energy storage device 1, the active material particles of the positive electrode 11 include secondary particles, and the secondary particles have irregularities on the surfaces thereof. The convex parts easily get stuck in the metal foil because they are projective. Therefore, secondary particles disposed with the convex parts projecting toward the metal foil 111 can more reliably get stuck in the metal foil 111 during production.

In the energy storage device 1, the thickness of the intermediate layer 113 is smaller than the average particle size D50 of the primary particles in the active material particles. With the above-mentioned configuration, the active material particles can more reliably pass through the intermediate layer 113 during production.

In energy storage device 1, the conductive aid of the intermediate layer is carbon black. Accordingly, more uniform conductivity can be imparted to the intermediate layer. The binder of the intermediate layer is a compound having a chitosan molecular structure. Accordingly, adhesion between the intermediate layer and the electrode substrate can be more reliably retained.

The energy storage device according to the present invention is not limited to the above-described embodiment, and it is needless to say that various changes can be made. For example, to the configuration of an embodiment can be added the configuration of another embodiment, or a part of the configuration of an embodiment can be replaced by the configuration of another embodiment. Further, a part of the configuration of an embodiment can be eliminated. The invention is defined by the appended claims. In the above-described embodiment, the energy storage device 1 including the positive electrode 11 having the intermediate layer 113 has been described in detail, but in the present invention, the negative electrode 12 may have an intermediate layer, and the active material particles of the negative electrode 12 may be stuck in the metal foil 121 of the negative electrode 12.

In the above-described embodiment, an electrode with an active material layer disposed on each of both surfaces of a metal foil of each electrode has been described, but in the energy storage device according to the present invention, the positive electrode 11 or the negative electrode 12 may include an active material layer on only one surface of the metal foil.

In the above-described embodiment, the energy storage device 1 including the electrode assembly 2 formed by winding the layered product 22 has been described in detail, but the energy storage device according to the present invention may include the layered product 22 which is not wound. Specifically, the energy storage device may include an electrode assembly in which a positive electrode, a separator, a negative electrode and a separator each formed into a rectangular shape are stacked in this order over a plurality of times.

In the above-described embodiment, the energy storage device 1 is used as a nonaqueous electrolyte secondary battery (e.g. lithium ion secondary battery) capable of being charged and discharged, but any of the type and volume (capacity) can be applied to the energy storage device 1. In the above-described embodiment, a lithium ion secondary battery has been described as one example of the energy storage device 1, but the energy storage device is not limited thereto. For example, the present invention is applicable to various secondary batteries, and energy storage devices of capacitors such as electric double layer capacitors.

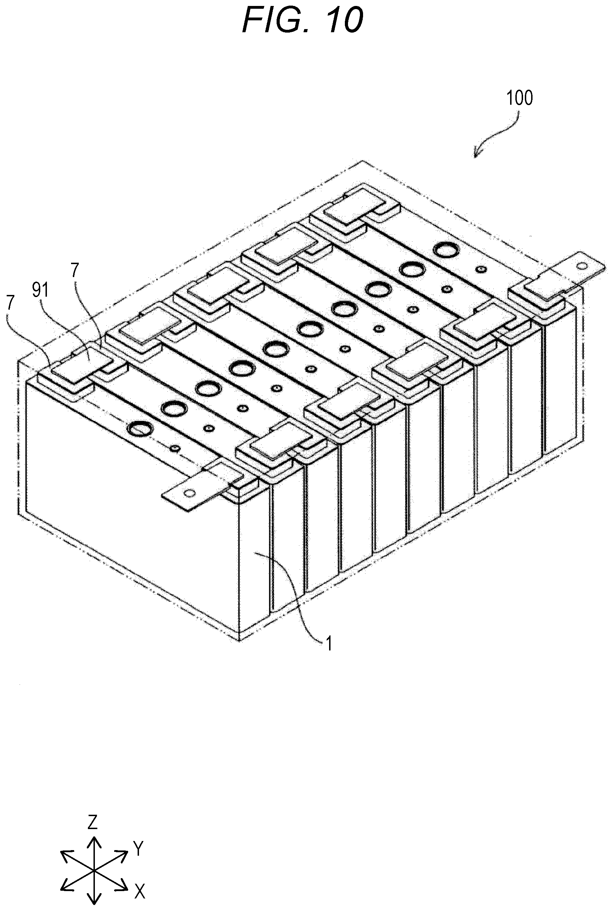

The energy storage device 1 (e.g. battery) may be used in the energy storage apparatus 100 shown in FIG. 10 (battery module when the energy storage device is a battery). The energy storage apparatus 100 includes at least two energy storage devices 1, and a bus bar member 91 which electrically connects two (different) energy storage devices 1. Here, the technique according to the present invention may be applied to at least one energy storage device.

### EXAMPLES

A nonaqueous electrolyte secondary battery (lithium ion secondary battery) was produced in the manner shown below.

### (Example 1)

### (1) Preparation of positive electrode

A composition for an intermediate layer was prepared by mixing a conductive aid (carbonaceous material; acetylene black; average particle size: 35 nm), a binder (chitosan; product designation "DCN"; manufactured by Dainichiseika Color & Chemicals Mfg. Co., Ltd.) and n-methyl-2-pyrrolidone (NMP) at a mass ratio of conductive aid/binder/NMP = 5/5/90. The prepared composition was applied onto each of both surfaces of a 15 µm-thick aluminum foil in such a manner that the amount of the composition after drying was 0.2 g/m². NMP as a solvent, a conductive aid (acetylene black), a binder (PVdF) and a positive active material (LiNi_{1/3}Co_{1/3}Mn_{1/3}O₂) were mixed and kneaded to prepare a mixture for a positive electrode. The blending amounts of the conductive aid, the binder and the positive active material were 4.5% by mass, 4.5% by mass and 91% by mass, respectively. The prepared mixture for a positive electrode was applied onto the composition for an intermediate layer in such a manner that the amount of the mixture after drying was 10 mg/cm². After drying, roll pressing was performed so that the active material filling density in the positive active material layer was 3 g/mL. The pressing condition (line pressure) during roll pressing was 30 kgf/mm. Thereafter, vacuum drying was performed to remove moisture.

### (2) Preparation of negative electrode

Graphite having an average particle size D50 of 10 µm was used as a negative active material. PVdF was used as a binder. A mixture for a negative electrode was prepared by mixing and kneading NMP as a solvent, a binder and a negative active material. The binder was blended in an amount of 7% by mass, and the negative active material was blended in an amount of 93% by mass. The prepared mixture for a negative electrode was applied onto a 10 µm-thick copper foil in such a manner that the amount of the mixture after drying was 5 mg/cm². After drying, roll pressing was performed so that the active material filling density in the negative electrode mixture was 1.5 g/mL, and vacuum drying was performed to remove moisture. (3) Separator

A polyethylene microporous membrane having a width of 10 cm and a thickness of 21 µm was provided as a separator.

### (4) Preparation of electrolyte solution

As an electrolyte solution, one prepared by the following method was used. A solvent obtained by mixing propylene carbonate, dimethyl carbonate and ethylmethyl carbonate in an amount of 30% by volume, 40% by volume and 30% by volume, respectively, was provided as a nonaqueous solvent, and LiPF₆ was dissolved in this nonaqueous solvent in such a manner that the salt concentration was 1.2 mol/L, thereby preparing an electrolyte solution.

### (5) Placement of electrode assembly in case

Using the positive electrode, the negative electrode, the electrolyte solution, the separator and a case, a battery was produced by a common method.

First, a sheet-shaped product formed by laminating the positive electrode and the negative electrode with the separator disposed therebetween was wound. Next, an electrode assembly formed by winding the sheet-shaped product was placed in a case main body of an aluminum prismatic container as a case. Subsequently, the positive electrode and the negative electrode were electrically connected to two external terminals, respectively. Further, a lid plate was attached to the case main body. The electrolyte solution was injected into the case through an electrolyte solution filling port formed in the lid plate of the case. Finally, the electrolyte solution filling port of the case was sealed to seal the case.

### (Example 2)

Except that the composition for an intermediate layer was applied in such a manner that the amount of the composition was 0.3 g/m², the same procedure as in Example 1 was carried out to produce a lithium ion secondary battery.

### (Example 3)

Except that the composition for an intermediate layer was applied in such a manner that the amount of the composition was 0.4 g/m², the same procedure as in Example 1 was carried out to produce a lithium ion secondary battery.

### (Example 4)

Except that the composition for an intermediate layer was applied in such a manner that the amount of the composition was 0.6 g/m², the same procedure as in Example 1 was carried out to produce a lithium ion secondary battery.

### (Comparative Example 1)

Except that the composition for an intermediate layer was applied in such a manner that the amount of the composition was 0.2 g/m², and the line pressure during roll pressing was 5 kgf/mm, the same procedure as in Example 1 was carried out to produce a lithium ion secondary battery.

### (Comparative Example 2)

Except that the intermediate layer was not prepared, the same procedure as in Example 1 was carried out to produce a lithium ion secondary battery.

### <Observation with electron microscope>

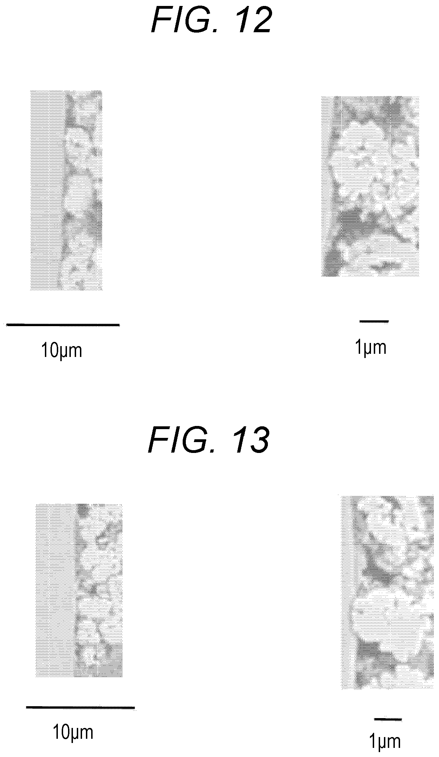

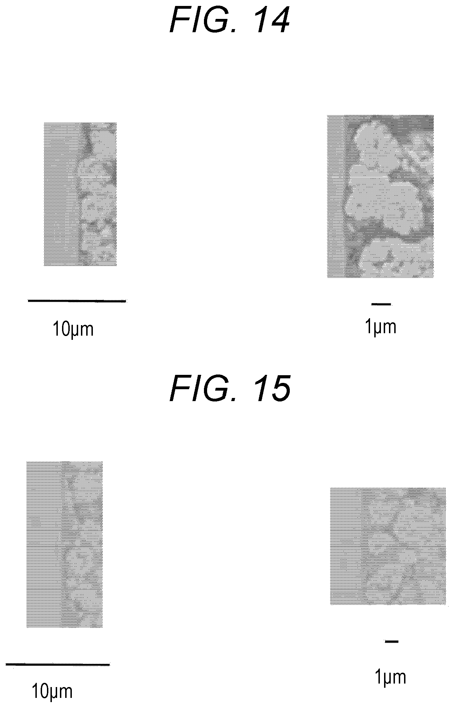

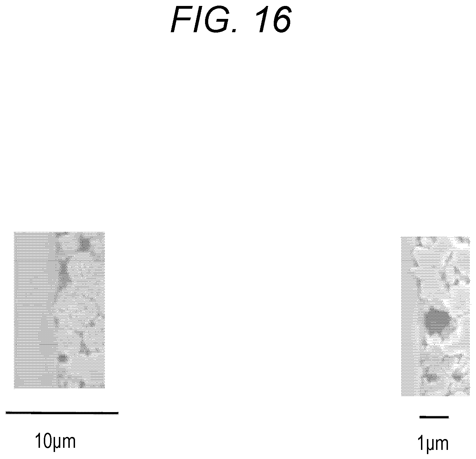

At the time when the positive electrode was prepared, the positive electrode was cut along the thickness direction, and the cross-section was observed with a scanning electron microscope. Examples of observation images in the examples and the comparative examples are shown in FIGS. 12 to 16. The straight line segment shown under each observation image shows a scale.

In the positive electrodes in Examples 1 to 4, the active material particles passed through the intermediate layer, and got stuck in (intruded into) the metal foil. In the positive electrode in Example 4, the active material particles passed through the intermediate layer, and were in contact with the metal foil and the intermediate layer. On the other hand, in the positive electrode in Comparative Example 1, the active material particles entered the intermediate layer, but were not in contact with the metal foil. In the positive electrode in Comparative Example 2, the active material particles were merely stuck in the metal foil.

### <Evaluation of battery performance (internal resistance)>

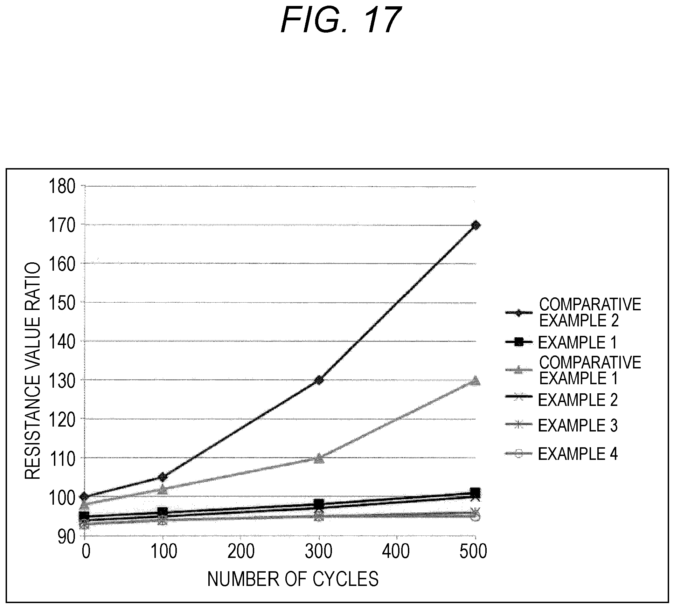

The resistance value ratio with respect to the number of charge-discharge cycles was determined by a common method to evaluate battery performance (internal resistance). FIG. 17 shows evaluation results from a graph prepared by plotting measured values with the number of charge-discharge cycles shown on the abscissa and the resistance value ratio shown on the ordinate. The resistance value is represented by a ratio (relative value) when the resistance value corresponding to 0 cycles in the battery of Comparative Example 2 is set as 100.

In the case of Comparative Example 2 in which the intermediate layer was absent, the resistance value ratio steadily increased as the number of cycles increased. On the other hand, when the intermediate layer was present, an increase in resistance value ratio slowed as the applied amount of the composition for an intermediate layer increased. This showed that existence of the intermediate layer and the amount of the composition for an intermediate layer evidently contributed to an improvement in battery performance. For the relationship between whether or not the active material gets stuck in the metal foil and the resistance value ratio, a comparison was made between Example 1 and Comparative Example 1. The result showed that when the active material was stuck in the metal foil (Example 1), the resistance value ratio was evidently lower as compared to the case where the roll pressing pressure on the composition for an intermediate layer was decreased, so that the active material was not stuck in the metal foil (Comparative Example 1). It has become apparent that the active material getting stuck in the electrode foil also contributes to a reduction in resistance value ratio.

## Claims

1. An energy storage device comprising:
an electrode including an electrode substrate; an active material layer which is disposed to cover a surface of the electrode substrate and which contains active material particles; and an intermediate layer which is disposed between the electrode substrate and the active material layer and which contains a binder,
**characterized in that** the active material particles include secondary particles including a central part with primary particles aggregated in a spherical form, and a convex part with primary particles projecting outward from a surface of the central part, and
wherein the convex part of the secondary particles of the active material particles of the active material layer enter the intermediate layer, and are in contact with the electrode substrate and the intermediate layer.

2. The energy storage device according to claim 1, wherein a thickness of the intermediate layer is not less than 0.1 µm and not more than 2 µm.

3. The energy storage device according to claim 1 or 2, wherein the electrode is a positive electrode.

4. The energy storage device according to claim 3, wherein the active material particles of the active material layer contain a lithium metal composite oxide represented by a chemical composition of LiₓNi_{y}Mn_{z}Co_{(1-y-z)}O₂ (where 0 < x ≤ 1.3, 0 < y < 1 and 0 < z < 1).

5. The energy storage device according to any one of claims 1 to 4, wherein a thickness of the intermediate layer is smaller than an average particle size D50 of primary particles in the active material particles, and wherein the thickness is the thickness of a part where the active material particles are not stuck in the intermediate layer.

6. The energy storage device according to any one of claims 1 to 5, wherein the intermediate layer further contains a conductive aid.

7. The energy storage device according to claim 6, wherein the conductive aid is carbon black.

8. The energy storage device according to any one of claims 1 to 7, wherein the binder of the intermediate layer is a compound having a chitosan molecular structure.

9. A method for producing an energy storage device according to any one of the claims 1 to 8, the method comprising:
applying a composition comprising a conductive aid and a binder to an electrode substrate;
applying a mixture containing active material particle to the applied composition; and
preparing the electrode by employing a roll pressing method,
wherein the pressing pressure is not less than 10 kgf/mm and not more than 100 kgf/mm.

## Patentansprüche

1. Energiespeichervorrichtung, umfassend:
eine Elektrode, die ein Elektrodensubstrat aufweist, eine Aktivmaterialschicht, die angeordnet ist, um eine Fläche des Elektrodensubstrats abzudecken, und die Aktivmaterialteilchen enthält, und eine Zwischenschicht, die zwischen dem Elektrodensubstrat und der Aktivmaterialschicht angeordnet ist und ein Bindemittel enthält,
**dadurch gekennzeichnet, dass** die Aktivmaterialteilchen sekundäre Teilchen aufweisen, die einen zentralen Teil mit primären Teilchen, die in einer Kugelform aggregiert sind, und einen konvexen Teil mit primären Teilchen, die nach außen von einer Fläche des zentralen Teils vorstehen, aufweisen, und
wobei der konvexe Teil der sekundären Teilchen der Aktivmaterialteilchen der Aktivmaterialschicht in die Zwischenschicht eintreten und mit dem Elektrodensubstrat und der Zwischenschicht in Kontakt sind.

2. Energiespeichervorrichtung nach Anspruch 1, wobei eine Dicke der Zwischenschicht nicht weniger als 0,1 µm und nicht mehr als 2 µm beträgt.

3. Energiespeichervorrichtung nach Anspruch 1 oder 2, wobei die Elektrode eine positive Elektrode ist.

4. Energiespeichervorrichtung nach Anspruch 3, wobei die Aktivmaterialteilchen der Aktivmaterialschicht ein Lithiummetall-Mischoxid enthalten, das durch eine chemische Zusammensetzung von LiₓNi_{y}Mn_{z}Co_{(1-y-z)}O₂ (wobei 0<x≤1, 3, 0<y<1 und 0<z<1) dargestellt ist.

5. Energiespeichervorrichtung nach einem der Ansprüche 1 bis 4, wobei eine Dicke der Zwischenschicht kleiner ist als eine durchschnittliche Teilchengröße D50 von primären Teilchen in den Aktivmaterialteilchen und wobei die Dicke die Dicke eines Teils ist, in dem die Aktivmaterialteilchen nicht in der Zwischenschicht anhaften.

6. Energiespeichervorrichtung nach einem der Ansprüche 1 bis 5, wobei die Zwischenschicht ferner ein leitfähiges Hilfsmittel enthält.

7. Energiespeichervorrichtung nach Anspruch 6, wobei das leitfähige Hilfsmittel Ruß ist.

8. Energiespeichervorrichtung nach einem der Ansprüche 1 bis 7, wobei das Bindemittel der Zwischenschicht eine Verbindung mit einer Chitosan-Molekularstruktur ist.

9. Verfahren zum Herstellen einer Energiespeichervorrichtung nach einem der Ansprüche 1 bis 8, wobei das Verfahren Folgendes umfasst:
Auftragen einer Zusammensetzung, die ein leitfähiges Hilfsmittel und ein Bindemittel umfasst, auf ein Elektrodensubstrat,
Auftragen einer Mischung, die Aktivmaterialteilchen enthält, auf die aufgetragene Zusammensetzung; und
Vorbereiten der Elektrode durch Einsetzen eines Roll-Pressverfahrens,
wobei der Pressdruck nicht weniger als 10 kgf/mm und nicht mehr als 100 kgf/mm beträgt.

## Revendications

1. Dispositif de stockage d'énergie, comprenant :
une électrode comportant un substrat d'électrode ; une couche de matière active qui est disposée pour recouvrir une surface du substrat d'électrode et qui contient des particules de matière active ; et une couche intermédiaire qui est disposée entre le substrat d'électrode et la couche de matière active et qui contient un liant,
**caractérisé en ce que** les particules de matière active comportent des particules secondaires comportant une partie centrale avec des particules primaires regroupées dans une forme sphérique, et une partie convexe avec des particules primaires qui font saillie vers l'extérieur à partir d'une surface de la partie centrale, et
dans lequel la partie convexe des particules secondaires des particules de matière active de la couche de matière active entrent dans la couche intermédiaire, et sont en contact avec le substrat d'électrode et la couche intermédiaire.

2. Dispositif de stockage d'énergie selon la revendication 1, dans lequel une épaisseur de la couche intermédiaire n'est pas inférieure à 0,1 µm et n'est pas supérieure à 2 µm.

3. Dispositif de stockage d'énergie selon la revendication 1 ou 2, dans lequel l'électrode est une électrode positive.

4. Dispositif de stockage d'énergie selon la revendication 3, dans lequel les particules de matière active de la couche de matière active contiennent un oxyde composite de métal et de lithium représenté par une composition chimique de LiₓNi_{y}Mn_{z}Co_{(1-y-z)}O₂ (où 0<x<1, 3, 0<y<1 et 0<z<1).

5. Dispositif de stockage d'énergie selon une quelconque des revendications 1 à 4, dans lequel une épaisseur de la couche intermédiaire est plus petite qu'une taille de particule moyenne D50 de particules primaires dans les particules de matière active, et dans lequel l'épaisseur est l'épaisseur d'une partie où les particules de matière active ne sont pas collées dans la couche intermédiaire.

6. Dispositif de stockage d'énergie selon une quelconque des revendications 1 à 5, dans lequel la couche intermédiaire contient en outre un moyen d'aide conducteur.

7. Dispositif de stockage d'énergie selon la revendication 6, dans lequel le moyen d'aide conducteur est du noir de carbone.

8. Dispositif de stockage d'énergie selon une quelconque des revendications 1 à 7, dans lequel le liant de la couche intermédiaire est un composé ayant une structure moléculaire de chitosane.

9. Procédé de production d'un dispositif de stockage d'énergie selon une quelconque des revendications 1 à 8, le procédé consistant à :
appliquer une composition comprenant un moyen d'aide conducteur et un liant sur un substrat d'électrode ;
appliquer un mélange contenant des particules de matière active sur la composition appliquée ; et
préparer l'électrode en employant une méthode de pressage à cylindre,
dans lequel la pression de pressage n'est pas inférieure à 10 kgf/mm et n'est pas supérieure à 100 kgf/mm.
